(19) **Europäisches Patentamt**
**European Patent Office**
**Office européen des brevets**

(11) **EP 2 653 292 A1**

(12) **EUROPEAN PATENT APPLICATION**
published in accordance with Art. 153(4) EPC

(43) Date of publication:
**23.10.2013 Bulletin 2013/43**

(51) Int Cl.:
*B29C 70/06* (2006.01)          *B32B 5/02* (2006.01)
*B32B 5/28* (2006.01)          *C08J 5/24* (2006.01)

(21) Application number: **11848052.4**

(22) Date of filing: **01.12.2011**

(86) International application number:
**PCT/JP2011/077749**

(87) International publication number:
**WO 2012/081406 (21.06.2012 Gazette 2012/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2010 JP 2010276880**

(71) Applicant: **Toray Industries, Inc.**
**Tokyo, 103-8666 (JP)**

(72) Inventors:
• **OKADA Kenya**
**Nagoya-shi, Aichi 455-8502 (JP)**
• **SHIHO Kosuke**
**Tokyo 103-8666 (JP)**
• **MORIUCHI Masanari**
**Nagoya-shi, Aichi 455-8502 (JP)**

(74) Representative: **Hoefer & Partner**
**Pilgersheimer Straße 20**
**81543 München (DE)**

(54) **CARBON-FIBER-REINFORCED PLASTIC MOLDED ARTICLE**

(57) A carbon-fiber-reinforced plastic molded article which comprises a laminate with at least two layers including a unidirectionally continuous-carbon-fiber-reinforced sheet in which continuous carbon fiber bundles are arranged in a predetermined one direction, characterized in that, when the carbon fibers of an outermost unidirectionally continuous-carbon-fiber-reinforced sheet forming a design surface of the molded article are observed at the design surface, the area fraction of regions where the proportion of carbon fibers which are inclined at angles of 3° or more to the predetermined one direction is 0.5% or more is 20% or less relative to the whole area of the design surface. Thus, the present invention can provide a molded article in which carbon fibers are uniformly arranged at the design surface and which has an excellent appearance design property.

FIG. 1

3 Optical microscope

2

1

Underwater

1 Sample of carbon-fiber-reinforced plastic molded article

**Description**

Technical Field of the Invention

The present invention relates to a carbon-fiber-reinforced plastic molded article, and specifically, to a carbon-fiber-reinforced plastic molded article in which carbon fibers are uniformly arranged at the design surface and which has an excellent appearance design property.

Background Art of the Invention

In a conventional carbon-fiber-reinforced plastic molded article, for example, in case of being molded after stacking unidirectional carbon fiber prepregs, even if the used prepreg is prepared by arranging carbon fiber bundles in one direction, a fluctuation of partial positions of carbon fiber bundles or a torsion of a part which is formed by partial joining of single fibers of carbon fibers in carbon fiber bundles, exists on the surface, and when formed into the molded article, the design property of the molded article is poor from the viewpoint of uniformity of appearance quality. The disturbances of fiber arrangement such as the fluctuation and the torsion vary in how to be seen depending upon the incident angle of a light illuminated to the surface of the molded article, they give a discomfort to the appearance quality, and they are called as "visual irritation", "glistening", "fluctuation" and the like and they have been shunned.

In order to avoid such so-called appearance irregularities, painting and the like has been performed, but, because the weight increases and, in addition, the design property of carbon fibers cannot be exhibited, further improvement of design property is desired for the fields required to perform transparent or semitransparent painting so as to be able to recognize the interior state.

In order to prevent the properties and appearance of a molded article from being damaged, although a technology for optimizing the property of curing or viscosity of epoxy resin composition used for a prepreg is known (for example, Patent document 1), a technology paying attention up to solve the problem of reduction of appearance quality ascribed to the above-described fluctuation in positions of carbon fiber bundles or disturbance in arrangement of carbon fibers on the design surface is not known. Further, although a manner for making the irregularities hard to be seen by concealing the surface by a glass scrim cloth is known (for example, Patent document 2), its advantage is small, and in order to exhibit the design property of carbon fibers, improvement of the disturbance in arrangement and the like of carbon fibers themselves is necessary.

Prior art documents

Patent documents

       Patent document 1: JP- A- 2004- 99814
       Patent document 2: US- A- 2009- 110872

Summary of the Invention

Problems to be solved by the Invention

Accordingly, in particular, paying attention to the problem of reduction of appearance quality ascribed to fluctuation in positions of carbon fiber bundles or disturbance in arrangement of carbon fibers on a design surface of a molded article, an object of the present invention is to provide a carbon- fiber- reinforced plastic molded article in which carbon fibers are uniformly arranged at the design surface and which has an excellent appearance design property.

Means for solving the Problems

To achieve the above- described object, a carbon- fiber- reinforced plastic molded article according to the present invention, which comprises a laminate with at least two layers including a unidirectionally continuous- carbon- fiber- reinforced sheet in which continuous carbon fiber bundles are arranged in a predetermined one direction, is characterized in that, when carbon fibers of an outermost unidirectionally continuous- carbon- fiber- reinforced sheet forming a design surface of the molded article are observed at the design surface, an area fraction of regions where a proportion of carbon fibers which are inclined at angles of 3° or more to the predetermined one direction is 0.5% or more is 20% or less relative to the whole area of the design surface.

In the present invention, in the molded article comprising the laminate with two or more layers, in particular, paying attention to an outermost unidirectionally continuous- carbon- fiber- reinforced sheet forming the design surface of the molded article, the area fraction of regions where the proportion of carbon fibers on the design surface of the unidirectionally continuous- carbon- fiber- reinforced sheet, which are inclined at angles of 3° or more, is 0.5% or more is 20% or less. Namely, the regions, where the proportion of carbon fibers on the design surface which are inclined at angles of 3° or more is 0.5% or more, cause at a high possibility reduction of the appearance quality called "visual irritation" and the like ascribed to the disturbance in arrangement of carbon fibers as aforementioned, but the area fraction of such regions relative to the whole area of the design surface is suppressed to be 20% or less. It is more preferred that the area fraction of such regions relative to the whole area of the design surface is 10% or less. Thus, by suppressing the area fraction of the regions causing the reduction of the appearance quality at a high possibility to be low, a good design surface can be ensured and a good appearance design property can be achieved as the whole of the molded article.

Further, in the carbon- fiber- reinforced plastic molded article according to the present invention, in order to achieve the above- described excellent design surface more securely, it is preferred that the fiber areal weight of the outermost unidirectionally continuous- carbon- fiber- reinforced sheet forming the design surface of the molded article is 30 g/m$^2$ or more and 100 g/m$^2$ or less, and more preferably it is 40 g/m$^2$ or more and 80 g/m$^2$ or less. Thus, by controlling it at a low areal weight of 100 g/m$^2$ or less, the carbon fibers are likely to be spread more uniformly, and an excellent design property of the molded article to be aimed can be achieved more easily. Further, by controlling the fiber areal weight at 30 g/m$^2$ or more, when the carbon fibers are spread uniformly, the single fiber can easily maintain its straightness.

Further, in the carbon- fiber- reinforced plastic molded article according to the present invention, in order to achieve the above- described excellent design surface more securely, it is preferred that the resin content of the outermost unidirectionally continuous- carbon- fiber- reinforced sheet forming the design surface of the molded article is 15 mass% or more and 50 mass% or less, and more preferably it is 20 mass% or more and 40 mass% or less. By controlling the resin content at 15 mass% or more, when the molded article is produced, the resin is liable to uniformly exist on the surface. From such a viewpoint, more preferably it is 20 mass% or more. Further, by controlling the resin content at 50 mass% or less, the arrangement of the fibers can be prevented from being disturbed by the flowability of the resin at the time of molding. From such a viewpoint, more preferably it is 40 mass% or less.

Further, in the carbon- fiber- reinforced plastic molded article according to the present invention, it is preferred that the fineness of one carbon fiber bundle in the outermost unidirectionally continuous- carbon- fiber- reinforced sheet forming the design surface of the molded article is 300 tex or less. In order to achieve the above- described excellent design surface of the molded article, it is effective to apply a tension to the continuous carbon fiber bundles at a stage for producing a prepreg which forms the above- described outermost unidirectionally continuous- carbon- fiber- reinforced sheet part, and by this, it becomes possible to suppress the fluctuation in positions of the carbon fiber bundles and to suppress the disturbance in arrangement of the carbon fibers even at the stage of the prepreg. However, if the carbon fiber bundles are too thick, because there is a fear that such suppression effects become little, the fineness per one carbon fiber bundle is preferably controlled at 300 tex or less. Although the lower limit of the fineness per one carbon fiber bundle is not particularly restricted, about 90 tex or more is sufficient for production of a prepreg.

Further, in the carbon- fiber- reinforced plastic molded article according to the present invention, it is preferred that the tensile elastic modulus of a carbon fiber used for the outermost unidirectionally continuous- carbon- fiber- reinforced sheet forming the design surface of the molded article is 270 GPa or more. Namely, as carbon fibers to be used, carbon fibers which can be easily arranged in the predetermined one direction when applied with a tension to make continuous carbon fiber bundles and each of which has a tensile elastic modulus of 270 GPa or more are used. By such a condition, in the process for producing a prepreg which forms the above- described outermost unidirectionally continuous- carbon- fiber- reinforced sheet part after molding, when a tension is applied to the continuous carbon fiber bundles as described above, the fluctuation in positions of carbon fiber bundles hardly occurs as well as the disturbance in arrangement of carbon fibers in the carbon fiber bundles hardly occurs. Maintaining such a condition a prepreg for forming the outermost unidirectionally continuous- carbon- fiber- reinforced sheet part is made, and after laminating it as an outermost unidirectionally continuous- carbon- fiber- reinforced sheet forming the design surface of a molded article, the molded article is molded. Therefore, also in the design surface of the molded article which has been molded, a more excellent design surface, which is less in fluctuation in positions of carbon fiber bundles and which is suppressed to be small in disturbance in arrangement of carbon fibers, can be realized.

As carbon fibers used in the present invention, although pitch group and polyacrylonitrile group carbon fibers can be used, polyacrylonitrile group carbon fibers are preferred because of the relatively high tensile strength. The tensile strength of the carbon fiber bundle is preferably 3,500 MPa or more, and more preferably 4,500 MPa or more. By selecting such a range, it becomes possible to lighten a composite to be obtained.

Hereinafter, the prepreg forming the unidirectionally continuous- carbon- fiber- reinforced sheet part will be explained in more detail.

In the carbon- fiber- reinforced plastic molded article according to the present invention, in the stage where a prepreg used for the outermost unidirectionally continuous- carbon- fiber- reinforced sheet forming the design surface of the molded article, it is necessary to spread carbon fibers uniformly, and in order to spread them uniformly, it is preferred that the number of single fibers in a carbon fiber bundle is 15, 000 or less. From such a viewpoint, although the number of single fibers is desired to be less, if the number of single fibers becomes smaller, in order to obtain a prepreg to be aimed, it becomes necessary to use a greater number of carbon fiber bundles and produce the prepreg by arranging the carbon fiber bundles with a uniform tension, and it is considered that such a condition increases industrial difficulty, and therefore, the number is preferably 500 or more in practice. Further preferably, the number is 1, 000 or more and 7, 000 or less.

As the resin component used for the prepreg employed for the outermost  unidirectionally continuous- carbon- fiber- reinforced sheet forming the design surface in the present invention, both a thermosetting resin and a thermoplastic resin can be used. In case of a thermosetting resin, it is excellent in stiffness and strength of molded article, and in case of a thermoplastic resin, it is excellent in impact strength and recycling property of molded article. As such thermosetting resins, for example, unsaturated polyester, vinyl ester, epoxy, phenol, resol, urea- melamine, polyimide, etc., and copolymer or modified material thereof, and/or a resin blended with two or more thereof, etc. can be used. Furthermore, in order to improve the impact resistance, an elastomer or a rubber component may be added to the above- described thermosetting resin.

Further, from the viewpoint that the carbon fibers in the prepreg used for the outermost unidirectionally continuous- carbon- fiber- reinforced sheet forming the design surface are spread uniformly, it is preferred to use a package wound with a carbon fiber bundle used as a raw material of the prepreg having a small yarn width relative to a target width per one carbon fiber bundle in the prepreg. Further, by a condition where a yarn having a too small yarn width is not used, the prepreg can be made without causing an irregularity at the time of spreading. The yarn width is more preferably 95% or less relative to the target width, and further preferably 90% or less, and preferably 25% or more, and more preferably 30% or more. Here, the target width is referred to as a value dividing the whole width of the prepreg by the number of used carbon fiber bundles. By controlling this value at 90% or less, interference of yarns adjacent to each other can be suppressed even if the yarns are spread at the time of making the prepreg, the straightness of single fibers can be maintained, and therefore, a prepreg having uniform thickness and spreading property can be produced. The yarn width of the carbon fiber bundle can be achieved by adequately setting the  fineness of carbon fibers, the number of the filaments, the process conditions on and after the surface treatment during production of carbon fibers, in particular, the winding condition, and selecting yarns within these conditions.

The process for producing the prepreg in the present invention is not particularly restricted as long as it can give a tension to arrange yarns in one direction and it has a function for spreading the carbon fiber bundles before impregnation of resin. However, because there is a possibility to cause entanglement of single fibers in the carbon fiber bundles in an equipment such as one for spreading the carbon fiber bundles by blowing compressed air, use of a spreading means due to rolls and the like is preferred.

Further, it is preferred that, with respect to the width of the carbon fiber sheet produced as described above, the total width of fiber bundles becomes 80- 98% relative to the sheet width of the prepreg, preferably 85- 95%, by applying a tension of 0.5- 6 cN/tex, preferably 1.5- 3 cN/tex, to each carbon fiber bundle. By controlling it 85% or more, a phenomenon, where the carbon fiber sheet greatly moves during resin impregnation by the resin forcibly pressed, can be prevented, and the straightness of carbon fibers can be maintained. Further, by controlling it 95% or less, reduction of the straightness by being damaged with the movement of carbon fibers in the thickness direction during resin impregnation can be suppressed, and in addition, reduction of the straightness due to overlapping of single fibers can also be suppressed.

The carbon- fiber- reinforced plastic molded article according to the present invention is obtained by laminating a prepreg used for a unidirectionally continuous- carbon- fiber- reinforced sheet forming the design surface as the outermost layer, laminating the other layers which are not particularly restricted and which are the same prepregs as that for the outermost layer or layers composed of other materials, and  molding. If the same prepregs are laminated, the materials may be one kind, and an error at the time of lamination can be avoided, and such a condition is preferred. In case where the areal weight of the same prepregs is low, because many number of layers are to be laminated in order to obtain a carbon- fiber- reinforced plastic molded article having a required thickness, use of prepregs different in kind of carbon fibers or areal weight is also preferred from the viewpoint of shortening of operation time for lamination or cost. Further, it is also preferred to form a sandwich structure by using a resin sheet, a foamed resin sheet or a light metal sheet for the other layers and using a carbon- fiber- reinforced sheet for an outermost layer opposite to the above- described outermost layer, from the viewpoint of lightening in weight or cost.

In the carbon- fiber- reinforced plastic molded article according to the present invention, it is preferred that the prepregs used for the outermost unidirectionally continuous- carbon- fiber- reinforced sheets forming the design surfaces and the other layers, which form the laminate, are disposed so as to become symmetric from the center of the laminate toward both surface layers. Here, "being disposed so as to become symmetric" means, for example, at the time of laminating the carbon- fiber- reinforced sheets, in case where the number of lamination is an even number, to be disposed so as to become symmetric relatively to a plane brought into contact with carbon- fiber- reinforced sheets corresponding to half of the number of lamination, and in case where the number of lamination is an odd number, to be disposed so that the carbon- fiber- reinforced sheets disposed on both sides relative to a carbon- fiber- reinforced sheet disposed at the center become symmetric relatively to the carbon- fiber- reinforced sheet disposed at the center. Furthermore, it is further preferred to be disposed so that the fiber orientations of the respective carbon- fiber- reinforced sheets become also symmetric. For example, in case where prepregs used for unidirectionally continuous- carbon- fiber- reinforced sheets with an identical weave structure are laminated by 6 layers (an even number), they can be laminated so that the fiber arrangement directions become 0°/ 90°/ 0°/ 0°/ 90°/ 0° from the upper side. Further, in case where unidirectionally continuous- carbon- fiber- reinforced prepregs are laminated by 7 layers (an odd number), they can be laminated so that the fiber arrangement directions become 0°/ 90°/ 0°/ 90°/ 0°/ 90°/ 0° from the upper side. If disposed in such a symmetric manner, a carbon- fiber- reinforced plastic molded article without a warp or a deflection can be obtained. On the contrary, if not disposed at a symmetric condition, depending upon the arrangement of the reinforcing fiber bundles, the disposition becomes a cause generating a warp or a deflection. Therefore, it is preferred that the prepreg used for the outermost unidirectionally continuous- carbon- fiber- reinforced sheet forming a design surface is laminated as the outermost layer and laminated also as the opposite- side outermost layer. Further, in case where the carbon fiber areal weight of the outermost unidirectionally continuous- carbon- fiber- reinforced sheet is low, by laminating prepregs used for the outermost unidirectionally continuous- carbon- fiber- reinforced sheets forming the design surfaces at the outermost layer and the opposite- side outermost layer so that the sheets are laminated at a lamination condition of 0°/ 0°/ 90°/ 0°/ 90°/ 0°/ 90°/ 0°/ 0° from the upper side, the outermost layer forming the design surface and the second layer present thereunder become an identical direction, the influence that the concavo- convex of the second- layer prepreg gives to the design property of the outermost layer can be suppressed small, and such a condition is preferred.

Further, in the carbon- fiber- reinforced plastic molded article according to the present invention, for the purpose of improving the adhesive property in case of making it adhere to another member, an interposition sheet for adhesion can be laminated at an outermost layer at a side opposite to the outermost layer forming the design surface. As this interposition sheet for adhesion, a sheet comprising polyamide- group resin, polyester- group resin, polycarbonate- group resin, EVA resin (ethylene- vinyl acetate copolymer resin), styrene- group resin or PPS (polyphenylene sulfide) group resin can be exemplified. Further, a modified material thereof may be employed. Such a thermoplastic resin may be used solely, or two or more may be used together as a copolymer or blend polymer thereof.

Where, the process for producing the carbon- fiber- reinforced plastic molded article is not particularly restricted, processes using thermosetting resins such as hand lay- up molding, spray- up molding, vacuum bag molding, pressurization molding, autoclave molding, press molding and transfer molding, and processes using thermoplastic resins such as press molding and stamping molding, can be exemplified. In particular, from the viewpoint of process ability and mechanical properties, vacuum bag molding, press molding and transfer molding can be suitably employed.

By molding using a laminate laminated with the prepreg in the present invention at the outermost layer, even if molded without particularly applying a tension in the carbon fiber direction of the prepreg at the time of the molding, a carbon-fiber-reinforced plastic molded article excellent in design property can be obtained without causing small fluctuation of disturbance of arrangement of the carbon fiber bundles.

At the time of producing the carbon-fiber-reinforced plastic molded article according to the present invention, it is necessary to mold while applying a pressure in order to obtain a predetermined shape, and for example, in the process such as press molding, it is preferred to mold at a pressing pressure of 0.5-5 MPa. If the pressure is too low, a molded article made by a pressing mold, having a predetermined thickness, cannot be obtained, and if the pressure is too high, the resin flows, and a resin deficit such as a pinhole may occur in the outermost layer forming the design surface, and such a condition is not preferred.

Further, in the carbon- fiber- reinforced plastic molded article according to the present invention, a structure can also be employed wherein a resin sheet having an areal weight of 15 g/m$^2$ or less is further provided on the outermost layer forming the design surface of the molded article. As this resin sheet, for example, a non- woven fabric resin sheet can be used. The kind of the resin of the resin sheet is not particularly restricted, and for example, polyethylene terephthalate (PET) can be used. Since such a resin sheet essentially does not bear the strength or stiffness of the molded article, it may be thin, and therefore, a resin sheet with a low areal weight of 15 g/m$^2$ or less may be employed. By adding such a resin sheet, even if very fine light and dark part is generated on the design surface formed by the above- described outermost unidirectionally continuous- carbon- fiber- reinforced sheet, it becomes possible to cover the light and dark part by the resin sheet with respect to the appearance, an excellent appearance design surface on which a light and dark part does not appear can be realized more securely. Although this resin sheet forms a final outermost layer, if the resin sheet becomes too thick over the areal weight of 15 g/m$^2$, there is a fear that carbon fibers in the inside layer cannot be observed, and further, in case of using a non- woven fabric, there is a fear that the resin does not extend up to the design surface and the surface appearance deteriorates.

Although the carbon-fiber-reinforced plastic molded article according to the present invention can be used as a housing of equipment excellent in design property, for example, even as it is, it can be made into a housing of equipment integrated by bonding with a second member. Although the second member is not particularly restricted, a thermoplastic resin member and the like can be suitably used. As the method for integrating, bonding using an adhesive and the like can be employed. Further, in the above-described case where an interposition sheet for adhesion is laminated at an outermost layer at a side opposite to the design surface of the carbon-fiber-reinforced plastic molded article according to the present invention, as the method for integrating, exemplified is a method for making another member adhere thereto at a process temperature of the melting point of the thermoplastic resin forming the interposition sheet for adhesion or higher, and then, cooling to bond them. Further, as the method for bonding the thermoplastic resin as the second member by melting it, for example, thermal welding, vibration welding, ultrasonic welding, laser welding, insert injection molding and outsert injection molding can be exemplified.

Such a carbon-fiber-reinforced plastic molded article according to the present invention can be applied to any molded article required with an excellent design surface on which a defect in appearance design property such as the aforementioned one does not appear, and for example, it is suitable as a housing of equipment in various fields. In particular, if it is applied to a housing of equipment of an electric/electronic product, an extremely excellent design surface can be obtained.

Effect according to the Invention

In the carbon-fiber-reinforced plastic molded article according to the present invention, a design surface exhibiting an excellent appearance, in which reduction of the appearance quality ascribed to fluctuation in positions of carbon fiber bundles and disturbance in arrangement of carbon fibers on the design surface is extremely small, can be obtained, and a carbon-fiber-reinforced plastic molded article having an excellent appearance design property can be provided. In particular, by applying the present invention to a housing of equipment, it becomes possible to greatly enhance the merchandise value of a product having the housing of equipment.

Brief explanation of the drawings

[Fig. 1] Fig. 1 is a schematic diagram showing a method for observing a design surface of a sample of a carbon-fiber-reinforced plastic molded article according to the present invention.
[Fig. 2] Fig. 2 is an explanation diagram showing an example of image processing.
[Fig. 3] Fig. 3 is an explanation diagram showing an example of image processing following the image processing shown in Fig. 2.

Embodiments for carrying out the Invention

Hereinafter, the present invention will be explained in detail together with embodiments.
In the carbon- fiber- reinforced plastic molded article according to the present invention, although the molded article comprises a laminate with at least two layers including a unidirectionally continuous- carbon- fiber- reinforced sheet in which continuous carbon fiber bundles are arranged in a predetermined one direction, among these, in particular, when carbon fibers of an outermost unidirectionally continuous- carbon- fiber- reinforced sheet forming a design surface of the molded article are observed at the design surface, an area fraction of regions where a proportion of carbon fibers which are inclined at angles of 3° or more to the predetermined one direction is 0.5% or more is 20% or less relative to the whole area of the design surface. Then, as aforementioned, as this outermost unidirectionally continuous- carbon- fiber- reinforced sheet, preferably one having a carbon fiber areal weight of 30 $g/m^2$ or more and 100 $g/m^2$ or less is used. Further, preferably, as aforementioned, the resin content of the outermost unidirectionally continuous- carbon- fiber- reinforced sheet is controlled to be 15 mass% or more and 50 mass% or less, and the fineness of one carbon fiber bundle in the outermost unidirectionally continuous- carbon- fiber- reinforced sheet is controlled at 300 tex or less. Further, preferably, as aforementioned, in the process for producing a prepreg, a unidirectionally continuous- carbon- fiber- reinforced sheet, prepared through a process in which each carbon fiber bundle is enlarged in width up to 80- 98% of a target width by being given with a tension of 0.5- 6 cN/tex to the carbon fiber bundles in advance before a resin is impregnated into the carbon fiber bundles, is used for the outermost layer forming the design surface of the molded article. Further, it is preferred to use carbon fibers each having a tensile elastic modulus of 270 GPa or more as the carbon fibers used for this outermost unidirectionally continuous- carbon- fiber- reinforced sheet. Furthermore, in case where a resin sheet is further provided on the outermost layer forming the design surface of the molded article, it is preferred to use a resin sheet having an areal weight of 15 $g/m^2$ or less.

Here, the method for determining "the area fraction of regions, where the proportion of carbon fibers which are inclined at angles of 3° or more is 0.5% or more, relative to the design surface" as the appearance property in the present invention by image processing will be explained.

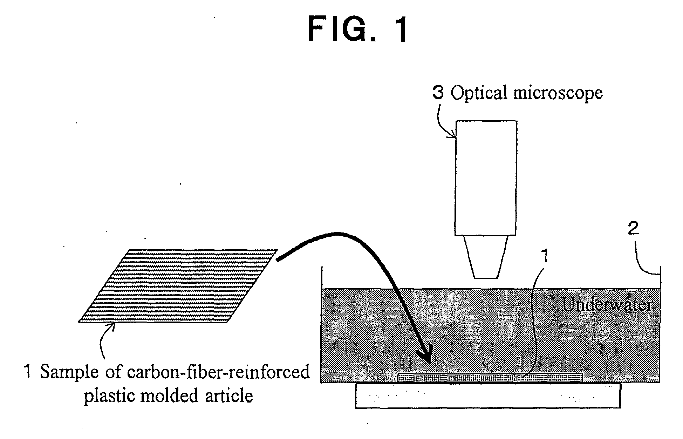

For example, as shown in Fig. 1, a sample 1 of a carbon- fiber- reinforced plastic molded article which comprises a laminate with at least two layers including a unidirectionally continuous- carbon- fiber- reinforced sheet having continuous carbon fiber bundles in which the outermost layer forming the design surface of the molded article is formed by the unidirectionally continuous- carbon- fiber- reinforced sheet is sunk under water in a predetermined water vessel 2, and the design surface of the sample 1 is observed by an optical microscope 3 from an upper side.

The measurement conditions at this determination are, for example, as follows.

Measurement equipment: KEYENCE VHX-500

Lens: VH-Z20R

Image visual field range: 3.04 x 2.28 mm

Magnification: 100 times

Resolution: 1600 x 1200 picture elements

Number of measurement points: 25 points or more (random)

Photographing: photographed so that fibers are directed mainly to 0° direction (horizontal direction)

Images taken out by photographing are processed as follows. The environment for carrying out the image processing is, for example, as follows.

OS: Windows (registered trademark) XP

CPU: Celeron 2.8 GHz

Memory: 512 MB

Used soft: Image Processing Library HALCON (Ver. 8.0, supplied by MV Tec Corporation)

First, image processing (1) is carried out in the following order.

Reading of image before processing (0) → Removal of noises → Emphasis of outline → Making binary mode → Expansion/contraction → Making to thin lines → Extraction of fibers having a length of 150 picture elements (0.285 mm) or more (extracted image (1) ) (actually, they are extracted as colored fibers.)

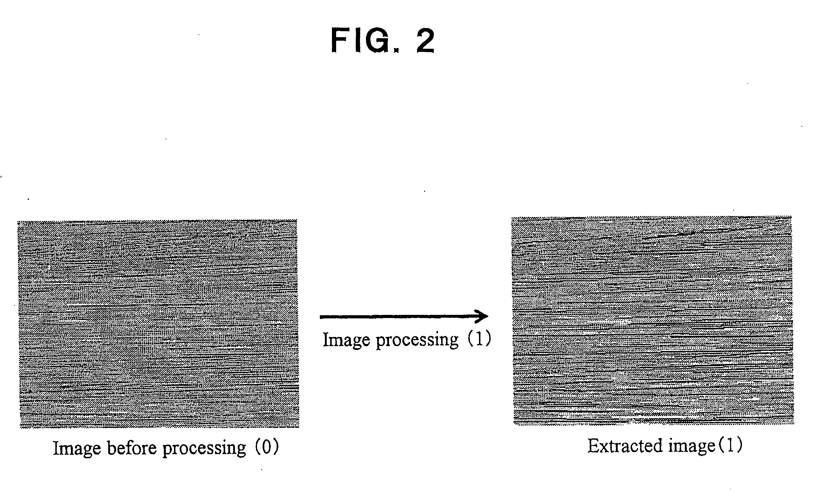

Examples of image before processing (0) and extracted image (1) are shown in Fig. 2.

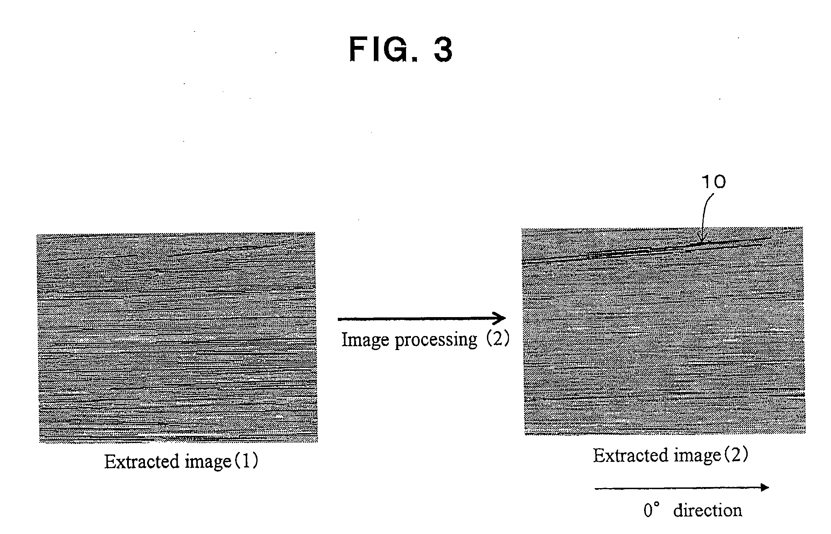

Next, image processing (2) as shown in Fig. 3 is carried out in the following order.

Determining the fiber angles with respect to the respective fibers extracted in the above- described extracted image (1), fibers 10 having inclined at ±3° or more relatively to the horizontal direction (0° direction) are extracted (in this extracted image (2), the fibers 10 having inclined at ±3° or more are extracted actually by being emphasized by being colored) .

Next, the areas of the fibers extracted in the above- described extracted images (1) and (2) are calculated respectively, the proportion of the above- described fibers 10 having inclined at ±3° or more is calculated using the following equation.

Proportion of fibers having inclined at ±3° or more (%) =

[Area of fibers extracted in extracted image (2) (number of picture elements)]/

[Area of fibers extracted in extracted image (1) (number of picture elements)] x 100

With respect to all the images observed as described above (25 points or more), the proportion of the inclined fibers is calculated, for example, as shown in Table 1 (in Table 1, Examples 1, 2 and Comparative Example 1 described later are exemplified.). Then, the rate of occurrence as to what % is the area fraction of regions where the proportion of carbon fibers on the design surface which are inclined at angles of 3° or more is 0.5% or more is calculated (the rate of occurrence is also exemplified in Table 1.).

[Table 1]

| | 1 | 2 | 3 | 4 | 5 | 6 | 7 | 8 | 9 | 10 | 11 | 12 | 13 |
|---|---|---|---|---|---|---|---|---|---|---|---|---|---|
| Example 1 | 0.00% | 0.00% | 0.00% | 0.00% | 0.00% | 0.00% | 0.00% | 0.00% | 0.00% | 0.00% | 1.07% | 0.00% | 0.00% |
| Example 2 | 0.00% | 0.00% | 0.00% | 0.00% | 0.00% | 0.00% | 0.00% | 0.00% | 0.00% | 0.00% | 0.00% | 0.00% | 0.00% |
| Comparative Example 1 | 0.00% | 0.00% | 0.38% | 1.35% | 0.78% | 0.38% | 0.00% | 0.00% | 2.12% | 0.80% | 6.22% | 1.96% | 0.00% |

| | 14 | 15 | 16 | 17 | 18 | 19 | 20 | 21 | 22 | 23 | 24 | 25 | Average | 0.5% or more |
|---|---|---|---|---|---|---|---|---|---|---|---|---|---|---|
| Continued Example 1 | 0.00% | 0.00% | 0.00% | 0.00% | 0.00% | 0.00% | 0.00% | 0.00% | 0.00% | 0.00% | 0.00% | 0.00% | 0.04% | 4% |
| Continued Example 2 | 0.00% | 0.00% | 0.00% | 0.00% | 0.00% | 0.00% | 0.00% | 0.00% | 0.00% | 0.00% | 0.00% | 0.00% | 0.00% | 0% |
| Continued Comparative Example 1 | 1.11% | 0.43% | 0.00% | 0.80% | 2.60% | 7.30% | 22.72% | 1.59% | 2.35% | 0.00% | 0.00% | 0.23% | 2.12% | 52% |

Where, in Examples and Comparative Examples described later, with respect to the above-described estimation of appearance of design due to the rate of occurrence of the regions where the proportion of carbon fibers on the design surface which are inclined at angles of 3° or more is 0.5% or more, the case where the rate of occurrence was 10% or less was ranked as "◎ " (particularly excellent), the case where the rate was more than 10% and 20% or less was ranked as "○ " (excellent), and the case where the rate was more than 20% was ranked as "x" (the appearance of design is not good.) .

Further, in the respective Examples and Comparative Examples, in addition, the tensile strength (MPa) and the tensile elastic modulus (GPa) of the used carbon fibers, and the fineness of the carbon fiber bundle (tex) were determined, and with respect to the prepreg for the outermost unidirectionally continuous- carbon- fiber- reinforced sheet forming the design surface of the molded article, the fiber areal weight ($g/m^2$), the fiber content (wt%), the tension applied to the carbon fiber bundles at the time of producing the prepreg (cN/tex), the yarn width after spreading of carbon fibers (mm), the yarn after processing into prepreg (mm) and the rate of enlarging the width (%) were determined, and further, in case where a resin sheet was provided on the outermost layer, its areal weight ($g/m^2$) was also determined.

Examples

Hereinafter, the present invention will be explained based on Examples and Comparative Examples.

Example 1:

Dimethyl sulfoxide solution containing 20 mass% of acrylonitrile-based polymer with an intrinsic viscosity [η ] of 1.80 comprising 99.5 mol% of acrylonitrile and 0.5 mol% of itaconic acid was used as a spinning raw liquid, it was discharged once into air using a die with 6,000 holes each having a hole diameter of 0.15 mm, and then, it was introduced into a coagulation bath of 35% dimethyl sulfoxide aqueous solution controlled at a temperature of 10 °C to prepare coagulated yarns. After the coagulated yarns washed by water and stretched, they were provided with a surfactant whose main component was amino-modified silicone dispersion, and then, they were dried and compacted, and stretched using a steam stretching apparatus, and the obtained precursor fibers each having a circular section and a smooth surface were wound.

The precursor fibers were served to a carbonization process, they were oxidized without causing twist while being unrolled so as not to cause twist, and then, carbonized at conditions of a maximum temperature of 1900°C and a tension of 5g/tex of carbonized yarn. Thereafter, after they were provided with compatibility with matrix by successively anodizing them with the same tension, a sizing agent was provided and dried to obtain carbon fibers having a fineness of 250 tex, number of filaments of 6,000, a strand strength determined based on JIS R7608:2007 of 5,490 MPa, an elastic modulus of 295 GPa and a yarn width on a bobbin of 3.5 mm.

jER1005F supplied by Mitsubishi Chemical Corporation of 20 parts by mass and jER828 of 80 parts by mass were melt blended, and DICY-7 supplied by Mitsubishi Chemical Corporation of 7.5 parts by mass and "Omicure" supplied by CVC Specialty Chemicals, Inc. of 4.2 parts by mass were added and mixed to obtain a resin composition. This resin composition was coated onto a carrier sheet to obtain a resin sheet for a prepreg.

The above-described carbon fiber bundles were arranged at a tension of 1.9 cN/tex, a carbon fiber sheet was obtained using a multi-stage width enlargement apparatus having a plurality of rollers, and a carbon-fiber-reinforced prepreg was obtained at the conditions shown in Table 2. This unidirectional carbon-fiber-reinforced prepreg was cut at a predetermined size, it was used for the first layer and the eighth layer as the outermost layers, and using prepregs "P3052S"supplied by Toray Industries, Inc. (carbon fiber areal weight: 150 $g/m^2$) for the inner layers (the second to the seventh layers), a laminate having totally eight layers was formed. As to the lamination structure, when the longitudinal direction of a carbon fiber molded article is referred to as 0° direction, the layers were laminated so as to become 0°/0°/ 90°/0°/0°/90°/0°/0°. After a material prepared by nipping this laminate with releasing films was evacuated by vacuum for 5 minutes for the purpose of removing air present in the laminate, it was press molded (temperature of mold: 150°C, pressure: 1.5 MPa, curing time: 20 minutes, target thickness after pressing: 0.8 mm) to obtain a carbon-fiber-reinforced plastic molded article. A tension for the purpose of arranging the carbon fibers of the prepreg was not particularly applied during the time after cutting the prepreg to the molding. The above-described conditions, the property of the obtained molded article (rate of occurrence of the regions where the proportion of carbon fibers on the design surface which are inclined at angles of 3° or more is 0.5% or more), and the result of the estimation of the appearance based thereon are shown in Table 2.

Examples 2-8, Comparative Examples 1-8:

The examination results of cases (Examples 2-8, Comparative Examples 1-8) where at least one of the conditions of tensile elastic modulus of carbon fibers, fineness of carbon fiber bundle, carbon fiber areal weight and content of resin in prepreg, tension at the time of production, rate of enlarging width, and other conditions such as a case where a resin sheet (PET non-woven fabric with an areal weight of 15 $g/m^2$ or less) was provided on the design surface, was changed from the above-described Example 1 are shown in Table 2 and Table 3.

[Table 2]

| | | Unit | Example 1 | Example 2 | Example 3 | Example 4 | Example 5 | Example 6 | Example 7 | Example 8 |
|---|---|---|---|---|---|---|---|---|---|---|
| Carbon fiber | Tensile strength | MPa | 5490 | 5490 | 4500 | 4500 | 5490 | 4900 | 4900 | 5490 |
| | Elastic modulus | GPa | 295 | 295 | 375 | 375 | 295 | 233 | 233 | 295 |
| | Fineness | tex | 250 | 250 | 190 | 190 | 250 | 200 | 402 | 250 |
| Prepreg | Fiber areal weight (FAW) | g/m² | 55 | 55 | 40 | 40 | 55 | 40 | 75 | 55 |
| | Content of resin | wt% | 35 | 35 | 40 | 40 | 35 | 35 | 50 | 40 |
| | Tension for carbon fiber bundle | cN/tex | 1.9 | 1.9 | 2.4 | 2.4 | 0.9 | 1.2 | 0.9 | 4.5 |
| | Yarn width after spreading of carbon fiber sheet | mm | 4.0 | 4.0 | 4.4 | 4.4 | 4.0 | 4.3 | 5.0 | 4.2 |
| | Yarn width after processing into prepreg | mm | 4.5 | 4.5 | 4.8 | 4.8 | 4.5 | 5.0 | 5.4 | 4.5 |
| | Rate of enlarging width | % | 89% | 89% | 92% | 92% | 89% | 86% | 93% | 93% |
| Areal weight of resin sheet | | g/m² | 0(none) | 12 | 0(none) | 6 | 0(none) | 0(none) | 0(none) | 0(none) |
| Rate of occurrence of 0.5% or more | | % | 4 | 0 | 4 | 0 | 12 | 16 | 20 | 20 |
| Appearance of design | | - | ◎ | ◎ | ◎ | ◎ | ○ | ○ | ○ | ○ |

[Table 3]

| | | Unit | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Carbon fiber | Tensile strength | MPa | 4900 | 4900 | 5490 | 5490 | 5490 | 5490 | 5490 | 5490 |
| | Elastic modulus | GPa | 233 | 233 | 295 | 295 | 295 | 295 | 295 | 295 |
| | Fineness | tex | 800 | 800 | 250 | 250 | 250 | 250 | 250 | 250 |
| Prepreg | Fiber areal weight (FAW) | g/m$^2$ | 150 | 150 | 55 | 55 | 55 | 55 | 55 | 55 |
| | Content of resin | wt% | 33 | 33 | 70 | 10 | 33 | 33 | 33 | 33 |
| | Tension for carbon fiber bundle | cN/tex | 0.9 | 0.9 | 0.9 | 0.9 | 0.9 | 0.1 | 10.0 | 10.0 |
| | Yarn width after spreading of carbon fiber sheet | mm | 6.7 | 6.7 | 4.1 | 4.1 | 1.7 or more | 4.0 | 4.3 | 4.2 |
| | Yarn width after processing into prepreg | mm | 7.3 | 7.3 | 4.5 | 4.5 | 1.7 | 4.5 | 4.5 | 6.3 |
| | Rate of enlarging width | % | 92% | 92% | 91% | 91% | >100% | 89% | 96% | 67% |
| Areal weight of resin sheet | | g/m$^2$ | 0(none) | 12 | 0(none) | 0(none) | 0(none) | 0(none) | 0(none) | 0(none) |
| Rate of occurrence of 0.5% or more | | % | 52 | 40 | 60 | 28 | 60 | 100 | 92 | 40 |

EP 2 653 292 A1

| | Unit | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Appearance of design | - | × | × | × | × | × | × | × | × |

As shown in Table 2 and Table 3, by controlling the tensile elastic modulus of carbon fibers, the fineness of carbon fiber bundle, the carbon fiber areal weight and content of resin in the prepreg, the tension at the time of production, and the like, in the preferable conditions defined in the present invention, it was understood that an excellent appearance of design of the molded article could be obtained without causing disturbance of carbon fiber bundles even in the molding (Examples 1, 3, 5-8). Moreover, in case where a resin sheet was provided, if the areal weight was within the preferred condition defined in the present invention, the rate of occurrence of the regions where the proportion of carbon fibers on the design surface which were inclined at angles of 3° or more is 0.5% or more was lowered, the property of the molded article was improved (Examples 2, 4). On the other hand, in case where the carbon fiber areal weight and content of resin in the prepreg, the tension at the time of production, and the like, were not in the preferable conditions defined in the present invention, the appearance of design was not improved (Comparative Examples 1, 3-8). Even if a resin sheet was further provided to such a molded article, the appearance of design could not be improved (Comparative Example 2).

Industrial Applications of the Invention

The carbon-fiber-reinforced plastic molded article according to the present invention can be applied to any molded article requiring an excellent design surface, and in particular, it is suitable as a housing of equipment.

Explanation of symbols

1:      sample of carbon-fiber-reinforced plastic molded article
2:      water vessel
3:      optical microscope
10:     fibers inclined at $\pm 3°$ or more

**Claims**

1. A carbon- fiber- reinforced plastic molded article which comprises a laminate with at least two layers including a unidirectionally continuous- carbon- fiber- reinforced sheet in which continuous carbon fiber bundles are arranged in a predetermined one direction, **characterized in that**, when carbon fibers of an outermost unidirectionally continuous- carbon- fiber- reinforced sheet forming a design surface of said molded article are observed at said design surface, an area fraction of regions where a proportion of carbon fibers which are inclined at angles of 3° or more to said predetermined one direction is 0.5% or more is 20% or less relative to the whole area a of said design surface.

2. The carbon- fiber- reinforced plastic molded article according to claim 1, wherein a fiber areal weight of said outermost unidirectionally continuous- carbon- fiber- reinforced sheet forming said design surface of said molded article is 30 g/m$^2$ or more and 100 g/m$^2$ or less.

3. The carbon- fiber- reinforced plastic molded article according to claim 1 or 2, wherein a resin content of said outermost unidirectionally continuous- carbon- fiber- reinforced sheet forming said design surface of said molded article is 15 mass% or more and 50 mass% or less.

4. The carbon- fiber- reinforced plastic molded article according to any of claims 1 to 3, wherein a fineness of one carbon fiber bundle in said outermost unidirectionally continuous- carbon- fiber- reinforced sheet forming said design surface of said molded article is 300 tex or less.

5. The carbon- fiber- reinforced plastic molded article according to any of claims 1 to 4, wherein a unidirectionally continuous- carbon- fiber- reinforced sheet, prepared through a process in which each carbon fiber bundle is enlarged in width up to 80- 98% of a target width by being given with a tension of 0.5- 6 cN/tex to said carbon fiber bundles in advance before a resin is impregnated into said carbon fiber bundles, is used for an outermost layer forming said design surface of said molded article.

6. The carbon- fiber- reinforced plastic molded article according to any of claims 1 to 5, wherein a tensile elastic modulus of a carbon fiber used for said outermost unidirectionally continuous- carbon- fiber- reinforced sheet forming said design surface of said molded article is 270 GPa or more.

7.  The carbon-fiber-reinforced plastic molded article according to any of claims 1 to 6, wherein a resin sheet having an areal weight of 15 g/m$^2$ or less is further provided on an outermost layer forming said design surface of said molded article.

8.  The carbon-fiber-reinforced plastic molded article according to any of claims 1 to 7, wherein said molded article is molded as a housing of equipment.

# FIG. 1

3 Optical microscope

2

Underwater

1

1 Sample of carbon-fiber-reinforced
plastic molded article

FIG. 2

Image before processing (0)

Image processing (1)

Extracted image (1)

# FIG. 3

Image processing (2) →

Extracted image(1)

Extracted image(2)

→
0° direction

<table>
<tr><td colspan="2" align="center">**INTERNATIONAL SEARCH REPORT**</td><td colspan="2">International application No.<br>PCT/JP2011/077749</td></tr>
</table>

A. CLASSIFICATION OF SUBJECT MATTER
*B29C70/06*(2006.01)i, *B32B5/02*(2006.01)i, *B32B5/28*(2006.01)i, *C08J5/24*
(2006.01)i

According to International Patent Classification (IPC) or to both national classification and IPC

B. FIELDS SEARCHED

Minimum documentation searched (classification system followed by classification symbols)
B29C70/00-70/68, B32B1/00-43/00, C08J5/24

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-291283 A (Toray Industries, Inc.),<br>08 November 2007 (08.11.2007),<br>claims 1, 2; paragraphs [0003], [0024]; fig. 1<br>(Family: none) | 1-6,8<br>7 |
| Y<br>A | JP 2007-231073 A (Toray Industries, Inc.),<br>13 September 2007 (13.09.2007),<br>paragraphs [0002], [0030], [0031], [0073]<br>(Family: none) | 1-6,8<br>7 |
| Y<br>A | JP 2005-014600 A (Toray Industries, Inc.),<br>20 January 2005 (20.01.2005),<br>claim 1; paragraph [0018]; fig. 3<br>(Family: none) | 1-6,8<br>7 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>01 February, 2012 (01.02.12) | Date of mailing of the international search report<br>14 February, 2012 (14.02.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/077749 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y<br>A | JP 2010-514592 A  (Societe de Technologie Michelin),<br>06 May 2010 (06.05.2010),<br>paragraph [0024]; fig. 1<br>& US 2010/0181006 A1    & EP 2125346 A<br>& WO 2008/080535 A1 | 1-6,8<br>7 |

Form PCT/ISA/210 (continuation of second sheet) (July 2009)

**REFERENCES CITED IN THE DESCRIPTION**

**Patent documents cited in the description**

- JP 2004099814 A
- US 2009110872 A